# EUROPÄISCHE PATENTSCHRIFT

(11) **EP 0 623 497 B1**
(45) Veröffentlichungstag und Bekanntmachung des Hinweises auf die Patenterteilung: **29.01.1997**
(21) Anmeldenummer: 94106920.5
(22) Anmeldetag: 03.05.1994
(51) Int. Cl.: B61B 10/02, B65G 19/02, B65G 47/26, B65G 17/48

(54) **Staufähiger Förderer**
Accumulator conveyor
Transporteur accumulateur

(30) Priorität: 03.05.1993 DE 9306659 U
(43) Veröffentlichungstag der Anmeldung: 09.11.1994
(73) Patentinhaber: RSL LOGISTIK GMBH & CO, D-86899 Landsberg (DE)
(72) Erfinder: Robu, Johann, D-82140 Olching (DE); Enderlein, Robby, D-86899 Landsberg/Lech (DE)
(74) Vertreter: Grünecker, Kinkeldey, Stockmair & Schwanhäusser Anwaltssozietät

(56) Entgegenhaltungen:
- EP-A- 0 304 543
- DE-A- 3 612 021
- DE-U- 9 106 794
- GB-A- 1 373 759
- GB-A- 2 237 256

## Beschreibung

Die Erfindung bezieht sich auf einen staufähigen Förderer der im Oberbegriff von Anspruch 1 erläuterten Art.

Derartige Förderer sind in großem Umfange bekannt, so beispielsweise aus der US-A-3 795 200. Der bekannte Förderer weist als Antriebsglied eine Antriebskette auf, an der eine Mitnahmeklinke schwenkbar befestigt ist. Die Mitnahmeklinke hintergreift mit einer Mitnahmefläche formschlüssig ein Fördermittel, so daß dieses Fördermittel bei der Bewegung des langgestreckten Antriebsgliedes mitgenommen wird. Die Klinke weist weiterhin eine Auflauffläche auf, die mit einer Auflauffläche am Fördermittel derart in Eingriff treten kann, daß die Klinke aus ihrer Mitnahmeposition gehoben wird, wenn ein derartiger Eingriff stattfindet. Mitnaheflächen und Auflaufflächen sind derart an den Fördermitteln und den Klinken angeordnet, daß die Auflauffläche einer Klinke mit der Auflauffläche eines in Förderrichtung unmittelbar voranlaufenden Fördermittels in Eingriff tritt, sobald ein vorbestimmter Abstand zwischen dem voranlaufenden Fördermittel und dem durch die Klinke mitgenommenen Fördermittel unterschritten wird, was beispielsweise bei einem Stau der Fall ist. Durch den Staudruck wird die Klinke angehoben, entläßt das bislang durch sie geschleppte Fördermittel und bewegt sich zusammen mit dem Antrieb wirkungslos über die aufgestauten Fördermittel nach vorn weg. Bei diesem Förderer bewegt sich somit lediglich die Mitnahmeeinrichtung, während sowohl das Antriebsglied als auch das Fördermittel in ihrer bisherigen Ausrichtung und im bisherigen Abstand zueinander verbleiben. Diese Art einer staudruckbetätigten Trenneinrichtung zum Trennen des Fördermittels vom Antrieb erfordert jedoch einen speziell ausgestalteten Antrieb, und muß geändert werden, wenn beispielsweise der Antrieb geändert wird.

Der Erfindung liegt somit die Aufgabe zugrunde, einen staufähigen Förderer mit einer universell einsetzbaren Trenneinrichtung bereitzustellen.

Die Aufgabe wird durch die kennzeichnenden Merkmale des Anspruchs 1 gelöst.

Durch die erfindungsgemäß verwendete Spreizeinrichtung kann das Fördermittel vom Antrieb getrennt werden, unabhängig davon, welche spezielle Art des Antriebs verwendet wird.

Zweckmäßigerweise wird beim Trennen das Fördermittel in der in Anspruch 2 beschriebenen Weise vom Antrieb weggeschwenkt.

Die Erfindung ist besonders zweckmäßig bei einem mit einem Reibbandantrieb ausgerüsteten, staufähigen Förderer gemäß Anspruch 3 einzusetzen. Generell sind Reibbandförderer an sich bereits staufähig, da sich das Reibband an den Reibflächen der Fördermittel entlang bewegen kann, wenn die Fördermittel in einem Stau aufgehalten sind. Da zwischen den Reibflächen und dem Reibband jedoch eine relativ hohe Reibung auftritt, die zur Mitnahme auch beladener Fördermittel ausreichen muß, werden Reibband und Reibflächen im Stau stark auf Verschleiß beansprucht. Darüber hinaus muß der Antrieb des Reibbandes mit steigender Anzahl gestauter Fördermittel eine ständig steigende Antriebskraft aufbringen, um die Reibungskräfte zu überwinden. Beide Nachteile werden durch die erfindungsgemäße Spreizvorrichtung weitgehend vermieden.

Die Ansprüche 4 bis 10 beschreiben eine besonders bevorzugte, einfach herzustellende und äußerst wirksame Konstruktion einer Spreizvorrichtung.

Die Herstellung wird durch die Ausgestaltung gemäß Anspruch 11 noch weiter verbessert.

Die Ausgestaltung gemäß Anspruch 12 ist dann besonders wirksam, wenn das Fördermittel nicht nur in einer ganz bestimmten Ausrichtung zum Antrieb auf der Schiene abrollen kann.

Eine Ausführungsbeispiel der Erfindung wird nachfolgend anhand der Zeichnungen näher erläutert. Es zeigen:
- Fig. 1: einen Schnitt durch einen erfindungsgemäßen Förderer im Förderbetrieb,
- Fig. 2: eine perspektivische, vergrößerte Darstellung der Spreizvorrichtung,
- Fig. 3: einen Schnitt durch einen Förderer gemäß Anspruch 1 im Stau, und
- Fig. 4: einen Schnitt durch einen Förderer in Höhe der Spreizvorrichtung, wobei Fig. 4A den Schnitt IVA-IVA aus Fig. 1 und Fig. 4B den Schnitt IVB-IVB aus Fig. 3 zeigt.

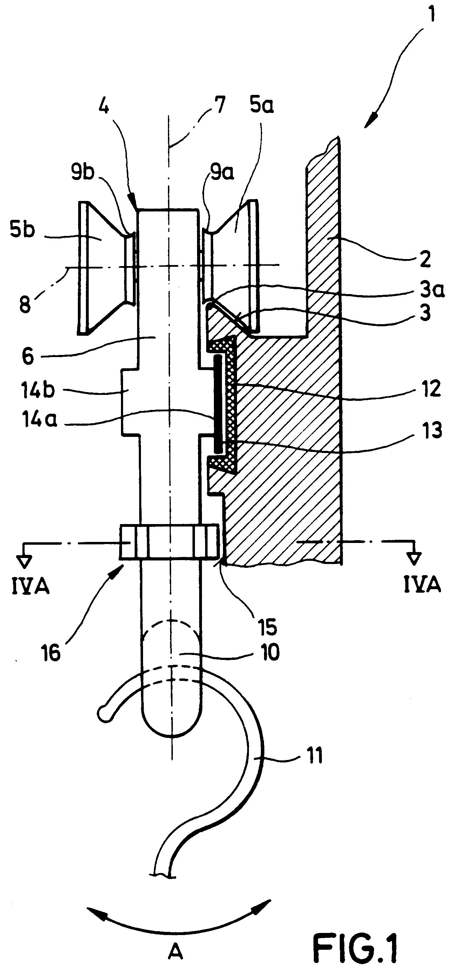

Aus Fig. 1 ist ein staufähiger Hängeförderer 1 ersichtlich, der eine im Schnitt gezeichnete Schiene 2 aufweist, die sich senkrecht zur Zeichnungsebene erstreckt. Die Schiene 2 enthält einen Lauffläche 3, die im dargestellten Ausführungsbeispiel unter einem Winkel von 45° verläuft. Auf der Lauffläche 3 ist ein Fördermittel 4 mit einer seiner Laufrollen 5a abgehängt. Das Fördermittel 4 enthält einen senkrechten Träger 6, von dem die Laufrollen 5a und 5b beidseitig und symmetrisch zur Mittellinie 7 des Trägers 6 vorstehen. Die Laufrollen 5a und 5b sind um eine waagerechte Drehachse 8 drehbar und weisen eine konisch verlaufende Mantellinie auf, wobei die schmalere Seite dem Träger 6 zugewandt ist. An der schmaleren Seite jeder der Laufrollen 5a, 5b ist jeweils eine Kehle 9a bzw. 9b vorgesehen, in der eine Spitze 3a der Schiene 2 am freien Ende der Laufbahn 3 eingreift. Auch die Spitze 3a ist analog zu den Kehlen 9a und 9b ausgerundet, so daß das Fördermittel 4 in Richtung des Pfeiles A quer zur senkrecht zur Zeichnungsebene verlaufenden Förderrichtung B um einen gewissen Betrag pendeln kann.

Am den Laufrollen 5a, 5b abgewandten Ende des senkrechten Trägers 6 ist dieser mit einem Haken 10 versehen, in den beispielsweise ein Kleiderhaken 11 mit den zu transportierenden Bekleidungsstücken eingehängt werden kann. Es ist jedoch auch möglich, zwei der Träger 6 durch eine an der Stelle des Hakens 10 vorgesehene Verbindungsstange zu einem Förderwagen zu verbinden.

Unterhalb der Laufbahn 3 ist in der Schiene 2 eine Führung 12 vorgesehen, in der ein Reibband 13 eines Reibband-Antriebs aufgenommen ist. An der dem Reibband 13 zugewandten Seite enthält das Fördermittel 4 einen vom Träger 6 vorspringenden Fördervorsprung 14a, der am Reibband 13 anliegt, wenn das Fördermittel 4 unter Wirkung seines Eigengewichts auf der Laufbahn 3 abgehängt ist, wobei der Fördervorsprung 14a durch das Gewicht des am Kleiderbügel 11 hängenden Bekleidungsstückes in noch engeren Kontakt mit dem Reibband 13 gedrückt wird. An der dem Fördervorsprung 14a gegenüberliegenden Seite der Mittellinie 7 ist am Träger 6 ein weiterer Fördervorsprung 14b vorgesehen, der in gleicher Weise mit dem Reibband 13 in Eingriff treten kann, wenn das Fördermittel 4 um 180° gedreht wird und mit seiner Laufrolle 5b auf der Laufbahn 3 abgehängt wird.

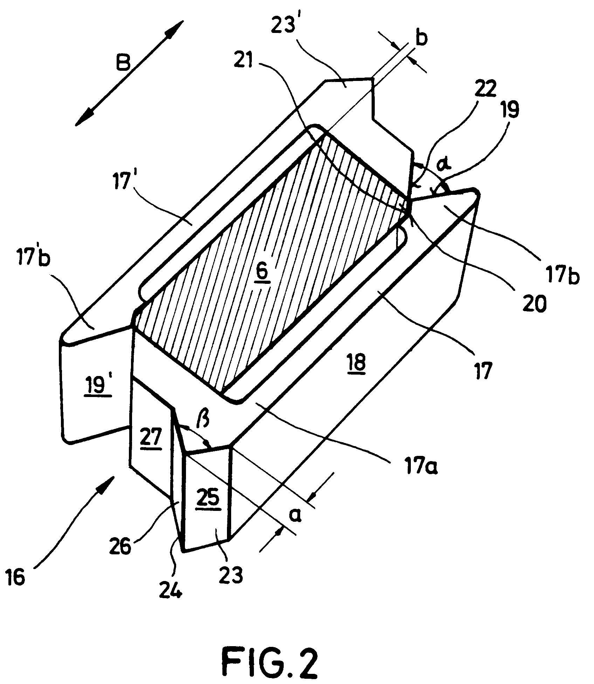

Unterhalb der Führung 12 ist an der Schiene 2 eine Anlagefläche 15 angeordnet, die sich parallel und im Abstand zum Reibband 13 des Antriebe erstreckt. Am Träger 6 ist in Höhe der Anlagefläche 15 eine Trenneinrichtung in Form einer Spreizeinrichtung 16 vorgesehen, die näher in Fig. 2 dargestellt ist.

Wie Fig. 2 zeigt, besteht die Spreizvorrichtung 16 aus einem am Träger 6 befestigten Kunststoffteil. An den der Anlagefläche 15 gegenüberliegenden Seite enthält die Spreizvorrichtung 16 einen federnden Steg 17, der mit seinem hinteren 17a am Träger 6 festgelegt ist, und dessen anderes in Richtung der Förderbewegung nach vorn weisendes Ende einen Haken 17b aufweist. Die der Anlagefläche 15 zugewandte Fläche 18 des Stegs 17 ist glatt und erstreckt sich parallel und in geringem Abstand zur Anlagefläche 15, wenn das Fördermittel 4 in der in Fig. 1 gezeigten Förderposition abgehängt ist. Der Haken 17b weist eine Auflauffläche 19 auf, die sich von der ebenen Außenfläche 18 schräg nach innen in Richtung auf die Mittellinie 7 des Trägers 6 erstreckt. Die Auflauffläche 19 mündet an der nach innen weisenden Spitze des Hakens 17b in einer Aussparung 20, die mit einem korrespondierenden Vorsprung 21 am Träger 6 zusammenwirkt. Vom Vorsprung 21 erstreckt sich eine weitere Auflauffläche 22 im Winkel zur Auflauffläche 19 schräg nach außen, so daß die beiden Auflaufflächen 19 und 22 bei entspranntem Federsteg 17 eine Vertiefung mit dreieckigem Querschnitt und einem Öffnungswinkel α begrenzen, der etwas kleiner als 90° ist.

Am dem Haken 17b gegenüberliegenden Ende der Spreizvorrichtung 16 ist ein schneidenartiger Spreizvorsprung 23 vorgesehen. Der Spreizvorsprung 23 wird durch zwei in einer Kante 24 zusammenlaufenden Gegenflächen 25 und 26 gebildet, die einen Winkel β miteinander einschließen, der größer als der Winkel α ist und bevorzugte 90° beträgt.

Neben dem Spreizvorsprung 23 verläuft eine Begrenzungsfläche 27 quer zur Förderrichtung B. Der Spreizvorsprung 23 steht über diese Begrenzungsfläche 27 um einen Betrag a vor, der größer ist als die Tiefe der durch die Auflaufflächen 19 und 22 gebildeten Vertiefung. Die Kante 24 des Spreizvorsprunges 23 liegt, quer zur Förderrichtung B gesehen, um einen Betrag b weiter von der Mittellinie 7 des Trägers 6 entfernt als die bei entspanntem Federsteg 17 zwischen den Auflaufflächen 19 und 22 gebildete Spitze der Vertiefung.

Die Spreizvorrichtung 16 enthält auch auf der dem Reibband 13 in Fig. 1 gegenüberliegenden Seite des Trägers 6 einen Federsteg 17' und einen Spreizvorsprung 23', die identisch zum Federsteg 17 und zum Spreizvorsprung 23 ausgebildet, jedoch spiegelbildlich angeordnet sind. Die entsprechenden Teile sind somit mit den gleichen Bezugszeichen, ergänzt durch einen Hochstrich, bezeichnet und werden nicht nochmals erläutert.

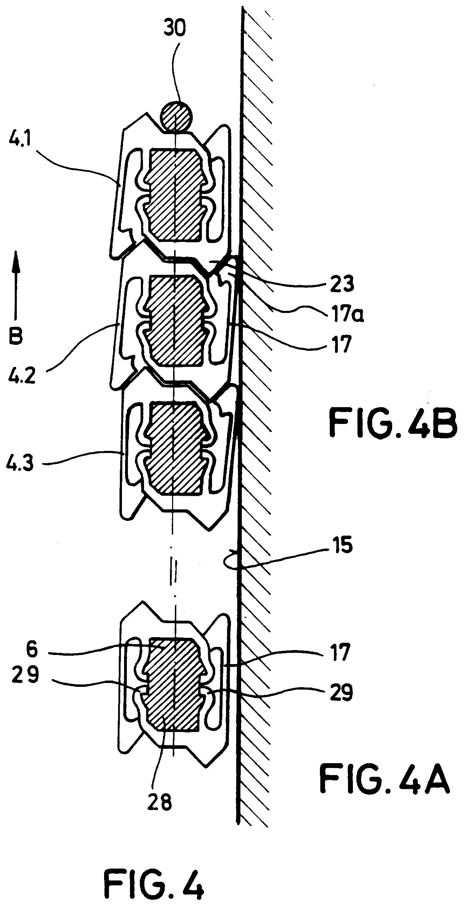

Im Ausführungsbeispiel gemäß Fig. 2 besteht die Spreizvorrichtung 16 aus Kunststoff und wurde einstückig mit dem ebenfalls aus Kunststoff gefertigten Träger 6 hergestellt. Wie Fig. 4 zeigt, können die Teile der Spreizvorrichtung 16 jedoch auch aus einzeln hergestellten Bauelementen zusammengesetzt und am Träger 6 befestigt werden. Im Ausführungsbeispiel der Fig. 4 ist jeweils ein Federsteg 17, der anliegende Spreizvorsprung 23 und die anliegende Begrenzungsfläche 27 an einem Bauteil 28 angeformt, das mit Befestigungsstegen am Träger 6 befestigt wird. Diese Ausbildung hat den Vorteil, daß für die Spreizeinrichtung 16 an beiden Seiten des Trägers jeweils ein in der gleichen Form hergestelltes Bauteil 28 verwendet werden kann, das lediglich beim Aufbringen auf den Träger entsprechend gedreht werden muß.

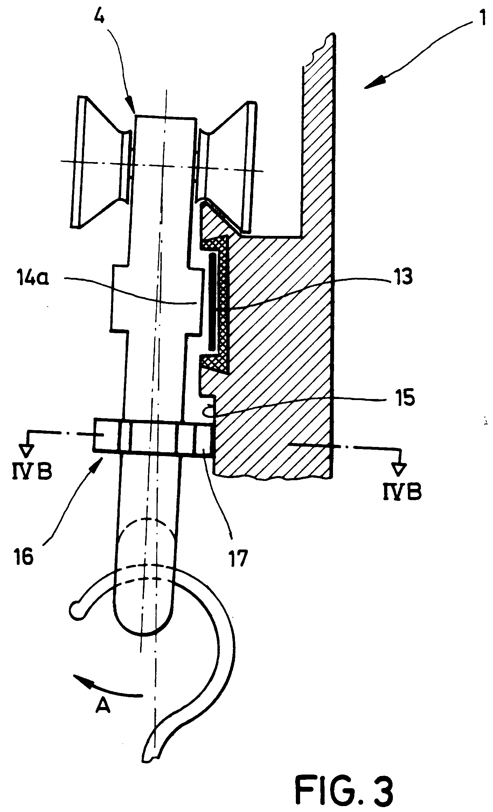

Die Wirkungsweise des Hängeförderers beim Stau wird nachfolgend anhand der Fig. 3 und 4 erläutert. Im Normalbetrieb werden die Fördermittel 4, wie in Fig. 1 gezeigt, durch Anlage eines ihrer Fördervorsprünge 14a oder 14b am Reibband 13 bei der Bewegung des Reibbandes 13 mitgenommen. Dabei erstreckt sich die Mittellinie 7 durch den Träger 6 im wesentlichen senkrecht. Der Federsteg 17 liegt parallel und im Abstand zur Anlagefläche 15. Trifft dieses Fördermittel 4 auf ein Hindernis, wie dies beispielsweise in Fig. 4B durch einen Haltefinger 30 angedeutet ist, so bleibt das in Förderrichtung B vorlaufende Fördermittel 4.1 stehen, während das Reibband 13 am Fördervorsprung 14a vorbeischleift. Trifft dann jedoch das unmittelbar nachfolgende Fördermittel 4.2 auf das festgehaltene Fördermittel 4.1, so schlagen die Auflaufflächen 19 und 22 des nachfolgenden Fördermittels 4.2 an die Gegenflächen 25 und 26 des vorderen Fördermittels 4.1 und drücken sich durch den Staudruck gegen den Spreizvorsprung 23. Durch den Abstand b zwischen der Kante 24 des Spreizvorsprunges 23 und der Spitze der durch die Auflauffläche 19 und 20 gebildeten Vertiefung wird das in Förderrichtung vorlaufende Fördermittel 4.1 in Richtung des Pfeiles A in die in Fig. 3 gezeigte Schräglage verschwenkt, in der der Fördervorsprung 14a vom Reibband 13 freikommt.

Trifft ein drittes Fördermittel 4.3 auf die bereits aufgestauten Fördermittel 4.1 und 4.2, so wird auch das zweite Fördermittel 4.2 zunächst durch den Abstandsunterschied b vom Reibband 13 abgehoben. Darüber hinaus wird jedoch das zweite Fördermittel 4.2 durch den Staudruck noch weiter auf das erste Fördermittel 4.1 geschoben, so daß sich der Spreizvorsprung 23, wegen seiner größeren Länge a, noch weiter zwischen die Auflaufflächen 19 und 22 des zweiten Fördermittels 4.2 eintaucht und den Federsteg 17 soweit abspreizt, bis dieser sich an der Anlagefläche 15 abstützt. Dadurch wird das nachlaufende Fördermittel 4.3 von der durch das Ausschwenken bedingten Drehmomentbelastung befreit. Die anhand der nachlaufenden Fördermittel 4.2 und 4.3 beschriebenen Wirkungen treten bei jedem noch auf den Stau auftreffenden Fördermitteln 4 in beliebiger Lange des Staubereichs auf. Auf diese Weise muß vom Antrieb des Reibbandes 13 lediglich die zwischen dem in Staurichtung letzten Fördermittel bzw., bei einem längeren Stau, zwischen den letzten Fördermitteln und dem Reibband auftretenden Reibkräfte überwunden werden, was zu eine sehr starken Entlastung des Antriebs sowie einer Herabsetzung des Verschleißes führt.

Wird das Hindernis in Form des Haltefingers 30 entfernt, so drückt die Federkraft des aufgespreizten Federsteges 14 des zweiten Fördermittels 4.1 den Spreizvorsprung 23 des ersten Fördermittels 4.1 aus der durch die Auflauffläche 19 und 22 gebildeten Vertiefung nach vorn, so daß das erste Fördermittel 4.1 wieder zurückschwenken kann, bis sein Fördervorsprung 14a am Reibband 13 anliegt und das erste Fördermittel 14.1 wegtransportiert wird. In gleicher Weise löst sich der Stau auch in den nachfolgenden Fördermitteln auf.

In Abwandlung des beschriebenen und gezeichneten Ausführungsbeispiels kann die erfindungsgemäßen Spreizvorrichtung auch bei Förderern vorgesehen werden, die für eine formschlüssige Mitnahme (mit nicht zu großen Mitnehmern) ausgelegt sind. In diesem Falle wird das im Stau jeweils hinterste Fördermittel durch den Mitnehmer so weit gegen die oder das vordere Fördermittel gedrückt, daß sich sein Federsteg 17 abspreizt und auch das hinterste Fördermittel ausschwenkt, so daß es von seinem Mitnehmer freikommt. Das hinterste Fördermittel wird dann jedoch sofort zurückfallen, und vom nächsten Mitnehmer wieder gegen den Stau gedrückt, worauf sich der Federsteg 17 wieder abspreizt und das Fördermittel erneut abhebt usw. Anstelle des Federstegs 17 kann auch ein anderes Federelement vorgesehen werden, das durch eine eigene Betätigungseinrichtung, anstelle des Spreizvorsprungs, in und außer Anlage mit der Anlagefläche zu bringen ist. Die Anlagefläche muß nicht unbedingt über die gesamte Länge des Reibbandantriebs vorgesehen sein, sondern kann sich nur dort befinden, wo ein Stau, beispielsweise beim Vereinzeln, konstruktiv vorgegeben oder regelmäßig zu erwarten ist.

## Patentansprüche

1. Staufähiger Förderer, insbesondere Hängeförderer (1), mit einem langgestreckten Antriebsglied (13), das mit Fördermitteln (4) in Antriebsverbindung steht, und mit einer staudruckbetätigten Trenneinrichtung (16) zum zeitweisen Lösen der Antriebsverbindung im Staubereich, **dadurch gekennzeichnet**, daß die Trenneinrichtung eine Spreizeinrichtung (16) zum Vergrößern des Abstandes zwischen dem Fördermittel (4) und dem Antriebsglied (13) zum Lösen der Antriebsverbindung aufweist.

2. Förderer nach Anspruch 1, **dadurch gekennzeichnet**, daß das Fördermittel (4) über Laufrollen (5a, 5b) quer zur Förderrichtung pendelnd an einer Schiene (2) abgehängt ist und durch die Spreizeinrichtung (16) von dem seitlich neben dem Fördermittel (4) verlaufenden Antriebsglied (13) quer zur Förderrichtung (B) wegschwenkbar ist.

3. Förderer nach Anspruch 1 ode 2, **dadurch gekennzeichnet**, daß das Antriebsglied ein Reibband (13) ist.

4. Förderer nach einem der Ansprüche 1 bis 3, **dadurch gekennzeichnet**, daß die Spreizeinrichtung (16) jeweils wenigstens eine Auflauffläche (19, 22) und wenigstens eine Gegenfläche (25, 26) aufweist, die an in Förderrichtung (B) aufeinanderfolgenden Fördermitteln (4) angeordnet sind, schräg zur Förderrichtung (B) verlaufen und im Staubereich derart aneinander anschlagen, daß das in Förderrichtung (B) vorlaufende Fördermittel (4.1, 4.2) vom Antriebsglied (13) getrennt wird.

5. Förderer nach einem der Ansprüche 1 bis 4, **dadurch** **gekennzeichnet**, daß die Spreizeinrichtung (16) ein zwischen einer außerhalb des Antriebsglieds (13) und parallel zu ihm angeordneten Anlagefläche (15) und dem Fördermittel (4) angeordnetes Federelement (17) aufweist.

6. Förderer nach Anspruch 5, **dadurch gekennzeichnet**, daß das Federelement (10) durch eine an einem unmittelbar benachbarten Fördermittel (4) angeordnete Betätigungseinrichtung (23) in Anlage an die Anlagefläche (15) bewegbar ist.

7. Förderer nach Anspruch 6, **dadurch gekennzeichnet**, daß das Federelement ein mit einem seiner Enden (17a) am Fördermittel (4) befestigter Federsteg (17) ist, dessen anderes Ende (17b) mit der Auflauffläche (19) versehen ist, und daß die Betätigungseinrichtung einen mit der Gegenfläche (25, 26) versehenen Spreizvorsprung (23) aufweist, der mit der Auflauffläche (19) des in Förderrichtung (B) unmittelbar benachbarten Fördermittels (4) in Eingriff bringbar ist, wobei durch Zusammenwirkung des Spreizvorsprunges (23) und der Auflauffläche (19) das Fördermittel (4) zum Trennen der Antriebsverbindung verschwenkt und der Federsteg (17) in Anlage an die Anlagefläche (15) gedruckt wird.

8. Förderer nach einem der Ansprüche 1 bis 7, **dadurch gekennzeichnet**, daß zwei in einem Winkel (α) angeordnete und eine Vertiefung bildende Auflaufflächen (19, 22) und zwei im Winkel (β) zueinander angeordnete und einen schneidenartigen Spreizvorsprung (23) bildende Gegenflächen (25, 26) vorgesehen sind, wobei die durch die Auflaufflächen (19, 22) gebildete Vertiefung um einen Betrag (b) näher an einer Mittellinie (7) des Fördermittels (4) liegt als eine durch die Gegenflächen (25, 26) des Spreizvorsprungs (23) gebildete schneidenartige Kante (24).

9. Förderer nach Anspruch 8, **dadurch gekennzeichnet**, daß die Höhe des Spreizvorsprunges (23) in Förderrichtung (B) größer ist als die Tiefe der durch die Auflaufflächen (19, 22) gebildeten Vertiefung in Förderrichtung (B).

10. Förderer nach Anspruch 8 oder 9, **dadurch gekennzeichnet**, daß der Winkel (α) zwischen den Auflaufflächen (19, 22) bei entspanntem Federsteg (17) kleiner ist als der Winkel (β) zwischen den Gegenflächen (25, 26) des Spreizvorsprunges (23).

11. Förderer nach einem der Ansprüche 7 bis 10, **dadurch gekennzeichnet**, daß der Federsteg (17) und der Spreizvorsprung (23) jeweils an einem am Fördermittel (4) zu befestigenden Kunststoffteil (29) angeformt sind.

12. Förderer nach einem der Ansprüche 1 bis 11, **dadurch gekennzeichnet**, daß an jeder Seite des Fördermittels (4) jeweils eine Spreizeinrichtung (16) vorgesehen ist.

## Claims

1. Accumulable conveyor, in particular suspension conveyor (1), comprising an elongated drive member (13) which is in drive communication with conveyor means (4), and an impact-pressure actuated separation means (16) for temporarily disconnecting the drive connection in the accumulation area, **characterized in** that said separation means includes a spreader device (16) for increasing the distance between conveyor means (4) and drive member (13) for disconnecting said drive connection.

2. A conveyor according to claim 1, **characterized in** that said conveyor means (4) is swingingly hung via rollers (5a, 5b) onto a rail (2) in a direction transverse to the conveying direction and is adapted to be pivoted away by said spreader device (16) in a direction transverse to conveying direction (B) from said drive member (13) extending laterally next to said conveyor means (4).

3. A conveyor according to claim 1 or 2, **characterized in** that said drive member is a friction belt (13).

4. A conveyor according to any one of claims 1 to 3, **characterized in** that said spreader device (16) has at least one abutment surface (19, 22) and at least one counter-surface (25, 26) which are arranged on conveyor means (4) successive in conveying direction (B), extend in a direction oblique to conveying direction (B) and abut on each other in the accumulation area such that said conveyor means (4.1, 4.2) which is the leading one in conveying direction (B) is separated from said drive member (13).

5. A conveyor according to any one of claims 1 to 4, **characterized in** that said spreader device (16) comprises a spring element (17) which is disposed between a contact surface (14) arranged outside said drive member (13) and in parallel therewith and said conveyor means (4).

6. A conveyor according to claim 5, **characterized in** that said spring element (17) is movable into contact with said contact surface (15) by an actuating means (23) arranged on an immediately neighboring conveyor means (4).

7. A conveyor according to claim 6, **characterized in** that said spring element is a spring web (17) which is secured with one of its ends (17a) to said conveyor means (4) and whose other end (17b) is provided with an abutment surface (19), and that said actuating means comprises a spreader projection (23) provided with said counter-surface (25, 26), which can be brought into engagement with said abutment surface (19) of said conveyor means (4) which is directly adjacent in conveying direction (B), said conveyor means (4) being pivoted by the co-action of said spreader projection (23) and said abutment surface (17) for disconnecting said drive connection, and said spring web (17) being pressed into contact with said contact surface (15).

8. A conveyor according to any one of claims 1 to 7, **characterized in** that there are provided two abutment surfaces (19, 22) which are arranged at an angle (α) and form a recess, as well as two counter-surfaces (25, 26) which are arranged relative to one another at an angle (β) and form a spreader projection (23) shaped like a blade, said recess formed by said abutment surfaces (19, 22) being closer to a center line (7) of said conveyor means (4) by an amount (b) than an edge (24) shaped like a blade and formed by said counter-surfaces (25, 26) of said spreader projection (23).

9. A conveyor according to claim 8, **characterized in** that the height of said spreader projection (23) in conveying direction (B) is greater than the depth of the recess formed by said abutment surfaces (19, 22) in conveying direction (B).

10. A conveyor according to claim 8 or 9, **characterized in** that said angle (α) between said abutment surfaces (19, 22) is smaller in the relaxed state of spring web (17) than said angle (β) between said counter-surfaces (25, 26) of said spreader projection (23).

11. A conveyor according to any one of claims 7 to 10, **characterized in** that said spring web (17) and said spreader projection (239 are each molded onto a plastic member (29) to be secured to said conveyor means (4).

12. A conveyor according to any one of claims 1 to 11, **characterized in** that a spreader means (16) is provided at each side of said conveyor means (4).

## Revendications

1. Transporteur accumulateur, en particulier transporteur suspendu (1), comportant un organe d'entraînement allongé (13) qui est en liaison d'entraînement avec des moyens de transport (4), et un dispositif de séparation (16) actionné par pression dynamique pour la suppression par moments de la liaison d'entraînement dans la zone d'accumulation, caractérisé par le fait que le dispositif de séparation présente un dispositif d'écartement (16) pour l'augmentation de la distance entre le moyen de transport (4) et l'organe d'entraînement (13) pour la suppression de la liaison d'entraînement.

2. Transporteur selon la revendication 1, caractérisé par le fait que le moyen de transport (4) est accroché oscillant perpendiculairement à la direction de transport à un rail (2) par des galets de roulement (5a, 5b) et peut être écarte par basculement perpendiculairement à la direction de transport (B) de l'organe d'entraînement (13) s'étendant latéralement près du moyen de transport (4) par le dispositif d'écartement (16).

3. Transporteur selon l'une des revendications 1 et 2, caractérisé par le fait que l'organe d'entraînement est une bande de friction (13).

4. Transporteur selon l'une des revendications 1 a 3, caractérisé par le fait que le dispositif d'écartement (16) présente au moins une surface d'engagement (19, 22) et au moins une contre-surface (25, 26) qui sont placées sur des moyens de transport (4) se suivant dans la direction de transport (B), s'étendent obliquement par rapport à la direction de transport (B) et, dans la zone d'accumulation, butent l'une contre l'autre de façon telle que le moyen de transport (4.1, 4.2) situé en avant dans la direction de transport (B) soit séparé de l'organe d'entraînement (13).

5. Transporteur selon l'une des revendications 1 à 4, caractérisé par le fait que le dispositif d'écartement (16) présente un élément élastique (17) placé entre une surface d'appui (15) placée à l'extérieur de l'organe d'entraînement (13) et parallèlement à celui-ci et le moyen de transport (4).

6. Transporteur selon la revendication 5, caractérisé par le fait que l'élément élastique (17) peut être amené en appui sur la surface d'appui (15) par un dispositif de manoeuvre (23) situé sur un moyen de transport (4) immédiatement voisin.

7. Transporteur selon la revendication 6, caractérisé par le fait que l'élément élastique est une barrette élastique (17) fixée par une de ses extrémités (17a) au moyen de transport (4) et dont l'autre extrémité (17b) est pourvue d'une surface d'engagement (19), et que le dispositif de manoeuvre présente une saillie d'écartement (23) qui est pourvue de la contre-surface (25, 26) et peut être mise en prise avec la surface d'engagement (19) du moyen de transport (4) immédiatement voisin dans la direction de transport (B), la coopération de la saillie d'écartement (23) et de la surface d'engagement (19) produisant un basculement du moyen de transport (4) pour la suppression de la liaison d'entraînement et une poussée de la barrette élastique (17) pour sa mise en appui sur la surface d'appui (15).

8. Transporteur selon l'une des revendications 1 à 7, caractérisé par le fait qu'il est prévu deux surfaces d'engagement (19, 22) faisant un angle (α) entre elles et formant un creux et deux contre-surfaces (25, 26) faisant un angle (β) entre elles et formant une saillie d'écartement du genre tranchant (23), le creux formé par les surfaces d'engagement (19, 22) étant plus proche d'une certaine quantité (b) d'un axe (7) du moyen de transport (4) qu'une arête du genre tranchant (24) formée par les contre-surfaces (25, 26) de la saillie d'écartement (23).

9. Transporteur selon la revendication 8, caractérisé par le fait que la hauteur dans la direction de transport (B) de la saillie d'écartement (23) est supérieure à la profondeur dans la direction de transport (B) du creux formé par les surfaces d'engagement (19, 22).

10. Transporteur selon l'une des revendications 8 et 9, caractérisé par le fait que l'angle (α) entre les surfaces d'engagement (19, 22) lorsque la barrette élastique (17) est détendue est inférieur à l'angle (β) entre les contre-surfaces (25, 26) de la saillie d'écartement (23).

11. Transporteur selon l'une des revendications 7 a 10, caractérisé par le fait que la barrette élastique (17) et la saillie d'écartement (23) sont faites sur un élément en plastique (29) se fixant au moyen de transport (4).

12. Transporteur selon l'une des revendications 1 a 11, caractérisé par le fait qu'un dispositif d'écartement (16) est prévu sur chaque côté du moyen de transport (4).
